# EUROPÄISCHE PATENTANMELDUNG

(11) **EP 4 787 165 A1**
(43) Veröffentlichungstag der Anmeldung: **05.08.2026**
(21) Anmeldenummer: 25155061.2
(22) Anmeldetag: 30.01.2025
(51) Int. Cl.: G06F 9/54, G05B 19/418

(54) **VERFAHREN UND SYSTEM ZUM BETRIEB EINES TECHNISCHEN GERÄTS MIT EINER STEUERVORRICHTUNG**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts (TD1) mit einer Steuervorrichtung (C1), umfassend folgende Schritte:
a) Bereitstellen von Daten und auszuführende Aufgaben für eine vorgegebene Anwendungs-Domäne (AD),
b) Bereitstellen eines Grund-Modells (IFM) und einer Menge an vordefinierten Adaptern (GAS) in zumindest einem Speicher,
c) Klassifizieren der Aufgaben als Aufgaben-Klassifizierung (TC),
d) Erstes Auswählen einer ersten Adapter-Teilmenge (SS1) aus der Menge an Adaptern im Speicher bei Übereinstimmung mit der Aufgaben-Klassifizierung (TC),
e) Zweites Auswählen einer zweiten Adapter-Teilmenge (SS2) aus der Menge an Adaptern im Speicher anhand von vordefinierten Kriterien für die Anwendungs-Domäne (AD),
f) Drittes Auswählen einer dritten Adapter-Teilmenge (SS3) aus der Menge an Adaptern im Speicher anhand eines vorgegebenen Schwellwerts für vordefinierte Kriterien für die Ausführung (EP) des Modells und der Adapter auf einer Rechenvorrichtung,
g) Bestimmen einer Anwendungs-Menge (AS) von Adaptern, welche in der ersten, der zweiten und der dritten Teilmenge enthalten (SS1-SS3) sind,
h) Erzeugen von Ergebnissen (RES) mit den Aufgaben (T) und den Daten (D) mithilfe eines Anwendungs-Modells (AM), welches durch Anwendung der Anwendungs-Menge (AS) auf das Grund-Modell (IFM) abgeleitet wird,
i) Erzeugen von Steuersignalen (CSIG) für die Steuervorrichtung (C1) zum Betrieb des technischen Geräts (TD1) auf Basis der erzeugten Ergebnisse, und Betreiben des technischen Geräts (TD1) mit den Steuersignalen (CSIG) durch die Steuervorrichtung (C1).

## Beschreibung

Die Erfindung betrifft ein computer-implementiertes Verfahren und ein System zum Betrieb eines technischen Geräts mit einer Steuervorrichtung.

Die Erfindung betrifft ferner ein Computer-Programm-Produkt.

Im Kontext von industriellen Basis- oder Grund-Modellen (engl. "industrial foundation models", kurz IFM) ist ein Adapter eine Technik, die verwendet wird, um ein vortrainiertes Modell anzupassen oder zu optimieren, um bestimmte Aufgaben auszuführen oder Domänen zu bedienen, ohne das gesamte Modell umfassend neu zu trainieren.

Anstatt die gesamte Architektur des vortrainierten Modells zu ändern, fügen Adapter aufgaben- oder domänenspezifische Parameter und Ebenen hinzu, während die ursprünglichen Parameter unverändert bleiben.

Diese zusätzlichen Komponenten ermöglichen es dem Modell, aufgabenspezifische Merkmale zu erlernen oder sich an domänenspezifische Nuancen anzupassen, ohne das Wissen zu vergessen, das in den vortrainierten Parametern kodiert ist.

Mit anderen Worten werden Adapter definiert, um ein für verschiedene Zwecke multifunktionales Modell einzusetzen, und mithilfe feinjustierter zweckgebundener Adapter das IFM zu präzisieren und das lokale Modell somit effizienter zu machen.

Die Bedeutung von künstlicher Intelligenz (kurz Kl) in Industriequalität liegt in ihrer Zuverlässigkeit und Vertrauenswürdigkeit, insbesondere in kritischen Sektoren, in denen Fehler schwerwiegende Folgen haben können.

Adapter tragen zu dieser Zuverlässigkeit bei, indem sie die Anpassung von Modellen mit minimaler Unterbrechung ihrer ursprünglichen Fähigkeiten ermöglichen, wodurch das Risiko unbeabsichtigter Verzerrungen oder Fehler bei der Feinabstimmung verringert wird.

Darüber hinaus ermöglichen Adapter eine effiziente Modellbereitstellung und -wartung, da sie im Vergleich zum erneuten Training des gesamten Modells von Grund auf weniger Rechenressourcen und Trainingsdaten benötigen.

Mehrere Adapter können kombiniert werden, um einen einzigen Multitasking-Adapter zu erhalten.

Beispielsweise können, ausgehend von einem IFM, welches über mehrere verschiedenen Anwendungs-Domänen gültig ist, Adapter angewendet werden, um eine Anpassung des IFM auf eine ausgewählte Domäne durchzuführen, und so ein Domänen-IFM zu erzeugen.

Ein Kunde kann das IFM oder auch das angepasste Domänen-IFM mithilfe von weiteren Adaptern, welche das Wissen des Kunden berücksichtigt, weiter verfeinert und angepasst werden, um so ein spezifisches Kunden-IFM zu erzeugen.

Adapter können sich gegenseitig in die Lernprozesse eingreifen, insbesondere wenn sie gemeinsame Parameter oder Schichten haben.

Diese Interferenz kann zu einer suboptimalen Leistung oder Schwierigkeiten bei der Optimierung des Gesamtmodells führen, da Änderungen an einem Adapter versehentlich das Verhalten anderer Adapter beeinflussen können.

Im Stand der Technik ist es bekannt, dass die Kombination mehrerer Adapter einfach und effizient ist, denn dies ist eine nützliche Möglichkeit, einem IFM weitere Fähigkeiten hinzuzufügen, ohne neue Adapter fein abstimmen zu müssen.

Viele Adapter sind leicht verfügbar, speziell Adapter für LLMs. So hostet beispielweise der "Hugging Face Hub"-Adapter als "Modelle" mit dem Tag "PEFT", was für "parameter-efficient fine-tuning" steht.

Die Kombination mehrerer Adapter funktioniert gut, aber nur, wenn die Adapter mit unterschiedlichen Daten, wie beispielweise Eingabeaufforderungen, fein abgestimmt wurden.

Ist dies nicht der Fall, kann es sein, dass ein neuer Adapter "verwirrt" wird und nicht weiß, welche Aufgabe er ausführen soll.

Standardmäßig muss man verschiedene Gewichtungen für die gewichtete Kombination ausprobieren.

Dies kann jedoch fehleranfällig und zeitaufwändig sein und kann in einem oben beschriebenen Szenario eine besondere Herausforderung darstellen, in dem verschiedene Adapter übereinander angewendet werden können, die von verschiedenen Organisationen oder Firmen geliefert werden.

Daher ist es Aufgabe der Erfindung eine Lösung zur Feinabstimmung von Modellen bereitzustellen, welche robust, einfach und effizient ist.

Die erfindungsgemäße Aufgabe wird durch ein computer-implementiertes Verfahren zum Betrieb eines technischen Geräts mit einer jeweiligen Steuervorrichtung gelöst, umfassend folgende Schritte:
a) Bereitstellen von Daten und auszuführende Aufgaben für eine vorgegebene Anwendungs-Domäne,
b) Bereitstellen eines Grund-Modells und einer Menge an vordefinierten Adaptern in zumindest einem Speicher,
c) Klassifizieren der Aufgaben als Aufgaben-Klassifizierung,
d) Erstes Auswählen einer ersten Adapter-Teilmenge aus der Menge an Adaptern im Speicher bei Übereinstimmung mit der Aufgaben-Klassifizierung,
e) Zweites Auswählen einer zweiten Adapter-Teilmenge aus der Menge an Adaptern im Speicher anhand von vordefinierten Kriterien für die Anwendungs-Domäne,
f) Drittes Auswählen einer dritten Adapter-Teilmenge aus der Menge an Adaptern im Speicher anhand eines vorgegebenen Schwellwerts für vordefinierte Kriterien für die Ausführung des Modells und der Adapter auf einer Rechenvorrichtung,
g) Bestimmen einer Anwendungs-Menge von Adaptern, welche in der ersten, der zweiten und der dritten Teilmenge enthalten sind,
h) Erzeugen von Ergebnissen mit den Aufgaben und den Daten mithilfe eines Anwendungs-Modells, welches durch Anwendung der Anwendungs-Menge auf das Grund-Modell abgeleitet wird,
i) Erzeugen von Steuersignalen für die jeweilige Steuervorrichtung zum Betrieb des technischen Geräts auf Basis der erzeugten Ergebnisse, und Betreiben des technischen Geräts mit den Steuersignalen durch die jeweilige Steuervorrichtung.

Dadurch wird erreicht, dass das IFM beziehungsweise Grund-Modell in der Modell-Größe spezifisch für die Anwendung und das verbundene technische Gerät verkleinert werden kann und so auf effiziente Weise auf einer Steuervorrichtung ausgeführt werden kann.

Mit anderen Worten kann durch die Verwendung eines spezifischen Adapters für eine anwendungsspezifische Aufgabe beim Betrieb des technischen Geräts kann die Erzeugung eines kompakten und dennoch genauen Modells erreicht werden, welches effizient auf einer Geräte-Plattform mit deutlich geringeren Ressourcen für Software und Hardware im Vergleich zu einem Server verwendet werden kann.

Die Ressourcen der Geräte-Plattform zum Betreiben des technischen Geräts hinsichtlich Software und Hardware können beispielsweise die Rechenleistung und/oder die Speicherleistung und/oder die Kommunikationsleistung der Rechenvorrichtung betreffen.

Typischerweise weist eine Steuervorrichtung nur begrenzte Ressourcen zur Verarbeitung von Modellen auf, also einen wenig leitungsfähigen Prozessor und begrenzten Speicher, im Vergleich zu Ressourcen einer Workstation oder eines Servers für eine Cloud-Infrastruktur.

Das technische Gerät kann sehr unterschiedlich sein, beispielsweise eine Pumpe, eine elektronische Steuerung, wie ein Wechselrichter, ein elektronischer Sensor, wie ein Beschleunigungssensor oder ein bildgebender Sensor, wie eine Kamera, eine Produktionsmaschine, wie ein Montage-Roboter, ein Transport-Roboter für die Logistik, eine CNC-Fräsmaschine, usw.

Die Steuervorrichtung zu einem solchen technische Gerät kann eine analoge Elektronik-Schaltung sein, eine pneumatische Steuerung, oder eine Mikroprozessorschaltung mit digitalen Steueranschlüssen, welche wiederum Leistungselektronik-Komponenten zum Betreiben von Aktuatoren ansteuert.

Die Steuervorrichtung generiert Steuerinstruktionen oder Steuersignal zum Betrieb des verbundenen technischen Geräts, welche mithilfe eines Modells auf Basis künstlicher Intelligenz, nämlich des - aus einem bereitgestellten großen IFM - erzeugten Anwendungs-Modells.

Das IFM/ Grund-Modell ist bevorzugt ein großes Sprachmodell (engl. "large language model", kurz LLM).

Beispiele für die Daten und Aufgaben, die für die Anwendung des technischen Geräts relevant sind, können Im Kontext von Bildverarbeitung Beispielbilder und eine Beschreibung der Aufgabe, wie das Finden von Objekten im Bild sein.

Bei textbasierten Aufgaben, wie für große Sprachmodelle, LLMs, kann dies ein Protokoll oder eine Reihe von PDF-Dokumenten und eine Beschreibung der Aufgabe sein, wie eine Zusammenfassung eines Dokuments, eine Wartungsanleitung oder ein Assistent zur Ursachenanalyse usw.

Für die bereitgestellten, allgemeinen Adapter ist es vorteilhaft, wenn diese in allgemeiner oder spezieller Weise mit den Aufgaben und/oder Daten zumindest in Teilen übereinstimmen, also ein Mindestmaß an Kompatibilität beziehungsweise Korrelation aufweisen.

Die allgemeinen Adapter können über entsprechende Gewichtungen in der Gesamtmenge hinterlegt sein, beispielsweise um erprobte und zuverlässige Adapter stärker einzubeziehen.

Die Kriterien für die Anwendungs-Domäne ergeben sich aus dem Anwendungsgebiet des technischen Geräts und können das Gerät mit spezifischen Parametern, wie Betriebsparameter und/oder Umgebungsparameter bei dessen Betrieb und/oder Spezifikationen des technischen Geräts selbst beschreiben.

Die Kriterien für die Ausführung des Modells und der Adapter auf einer Rechenvorrichtung können Leistungs-Kriterien der Rechenvorrichtung sein, welche die Effizienz der Verarbeitung von Recheneigenschaften und/oder Speichereigenschaften und/oder Kommunikationseigenschaften der Rechenvorrichtung beschreiben, oder auch Leistungs-Kriterien für die Steuervorrichtung bei der Erzeugung und Ausführung von Steuersignalen zum Betrieb des technischen Geräts.

Die Klassifizierung kann anhand von Wahrscheinlichkeitsverteilungen für die Daten und/oder Aufgaben erfolgen.

Durch die Verwendung von Aufgaben-Adapter-Kompatibilitätsbewertungen kann der vorgeschlagene Ansatz der aufgabenspezifischen Anpassung effizient Adapter auswählen und zusammenführen, die für bestimmte Aufgaben am besten geeignet sind, was sicherstellt, dass sich der Feinabstimmungsprozess auf relevante Adapter konzentriert, und zu einer verbesserten Leistung und Effizienz bei der aufgabenspezifischen Anpassung führt.

Der Ansatz ermöglicht eine hohe Flexibilität bei der Integration von Adaptern basierend auf ihrer Kompatibilität mit Aufgaben, da Adapter mit höheren Kompatibilitätsbewertungen priorisiert werden, aber der Schwellenwert bei Bedarf oder auch zeitlich dynamisch angepasst werden kann, um auch Adapter mit etwas niedrigeren Gewichtungen einzubeziehen.

Die Nutzung von vortrainierten Adaptern und Kompatibilitätsbewertungen optimiert den Adapterauswahlprozess und vermeidet unnötige Feinabstimmungen mit Adaptern, die für die jeweilige Aufgabe möglicherweise nicht gut geeignet sind, was die Effizienz steigert, indem der Rechenaufwand und der Zeitaufwand für die Feinabstimmung reduziert werden, während gleichzeitig eine effektive Anpassung an aufgabenspezifische Daten erreicht wird.

Mit zunehmender Anzahl von Aufgaben und Adaptern lässt sich der Ansatz effektiv skalieren, und es kann eine Vielzahl von Aufgaben und Adaptern bewältigt werden und verschiedene Anwendungsdomänen und Szenarien ohne wesentliche Änderungen an der zugrunde liegenden Methodik können auf einfache Weise unterstützt werden.

In einer Weiterbildung der Erfindung ist es vorgesehen, dass die Daten Bilddaten sind, und die auszuführenden Aufgaben Bildanalyse-Aufgaben sind.

Dadurch wird erreicht, dass besonders große Modelle, welche Bild-Daten beispielsweise eines Kamera-Sensors umfassen, auf der Steuervorrichtung effizient verarbeitet werden können.

Dies ist insbesondere für eine visuelle Qualitäts-Inspektion zur Anwendung bei einem, von einer Produktionsmaschine hergestellten/ zusammengebauten Produkt oder einem von einer Bearbeitungsmaschine bearbeiteten Produkt vorteilhaft.

Die Anwendung eines jeweiligen spezifischen Modells ist besonders günstig, wenn beispielsweise mehrere Produktions- oder Bearbeitungsmaschinen innerhalb eines Klienten-Server-System betrieben werden, diese aber unterschiedliche Produkte herstellen und daher unterschiedliche KI-Modelle für die jeweiligen Herstellungs-/ Bearbeitungsprozesse der jeweiligen Produkte anwenden.

Analog dazu können beispielsweise auch technische Geräte wie Pumpen oder Motoren unterschiedlich von jeweiligen Klienten mit unterschiedlichen KI-Modellen performant betrieben werden.

In einer Weiterbildung der Erfindung ist es vorgesehen, dass die Daten Betriebsdaten vom Betrieb des technischen Geräts sind, und die auszuführenden Aufgaben Betriebsanalyse-Aufgaben sind.

Dadurch wird erreicht, dass besonders große Modelle, welche Betriebs-Daten beispielsweise von Sensoren, wie beispielsweise Beschleunigungssensoren, welche den Betrieb eines Motors überwachen, umfassen, auf einer Steuervorrichtung effizient verarbeitet werden können.

In einer Weiterbildung der Erfindung ist es vorgesehen, dass die Kriterien für die Ausführung des Modells und der Adapter auf einer Rechenvorrichtung Leistungs-Kriterien sind, welche Recheneigenschaften und/oder Speichereigenschaften und/oder Kommunikationseigenschaften der Rechenvorrichtung beschreiben.

Dadurch wird erreicht, dass die verfügbaren Ressourcen bei der Modell-Reduktion entsprechend berücksichtigt werden können.

In einer Weiterbildung der Erfindung ist es vorgesehen, dass die Kriterien für die Ausführung des Modells Leistungs-Kriterien bei der Erzeugung und Ausführung von Steuersignalen zum Betrieb des technischen Geräts durch die Steuervorrichtung beschreiben.

Dadurch wird erreicht, dass die verfügbaren Ressourcen einer verbundenen Steuervorrichtung bei der Modell-Reduktion entsprechend berücksichtigt werden können.

In einer Weiterbildung der Erfindung ist es vorgesehen, dass die Steuervorrichtung von einem Klienten eines Klienten-Server-Systems umfasst ist, und vorzugsweise eine Edge-Vorrichtung ist.

Dadurch wird erreicht, dass das Anwendungs-Modell auf effiziente Weise auf einer Steuervorrichtung eines Klienten-Server-Systems ausgeführt werden kann, und somit auf einfache Weise, ausgehend von einem zentralen IFM, jeweils ein reduziertes beziehungsweise komprimiertes Anwendungs-Modell auf mehrere Klienten verteilt werden kann, und darüber hinaus für jeden verbundenen Klienten ein individuelles/spezifisches und daher besonders genaues Anwendungs-Modell innerhalb des Systems erzeugt und für ein jeweiliges technisches Gerät angewendet werden kann.

In einer Weiterbildung der Erfindung ist es vorgesehen, dass die Schritte a) bis h) des Verfahrens durch den Server des Klienten-Server-Systems ausgeführt werden.

Dadurch kann durch die umfangreichen Ressourcen des Servers das Erzeugen der Ergebnisse und des Anwendungs-Modells auf effiziente Weise erreicht werden.

In einer Weiterbildung der Erfindung ist es vorgesehen, dass die Steuersignale Steuerinstruktionen zur Ausführung durch einen Prozessor vorgesehen sind.

Die Steuersignale können analoge oder digitale Signale sein, und auch digitale Steuerinstruktionen umfassen.

Die erfindungsgemäße Aufgabe wird durch ein System zum Betrieb eines technischen Geräts mit einem verbundenen Steuergerät gelöst, ferner umfassend einen Prozessor und einen Speicher, wobei das System dazu eingerichtet ist, das erfindungsgemäße Verfahren auszuführen.

In einer Weiterbildung der Erfindung ist es vorgesehen, dass das System ein Klienten-Server-Systems ist, und die Steuervorrichtung von einem Klienten des Klienten-Server-Systems umfasst ist, und vorzugsweise eine Edge-Vorrichtung ist.

Die erfindungsgemäße Aufgabe wird durch ein Computer-Programm-Produkt gelöst, umfassend Befehle, die bei der Ausführung des Programms durch einen Computer diesen veranlassen, das erfindungsgemäße Verfahren/die Schritte des erfindungsgemäßen Verfahrens auszuführen.

In den nachfolgenden Figuren ist die Erfindung anhand eines Ausführungsbeispiels näher beschrieben. In den Figuren zeigt
- Fig. 1: ein Ausführungsbeispiel der Erfindung für die zugrunde liegenden Daten und Modelle,
- Fig. 2: ein Ausführungsbeispiel für das erfindungsgemäße Verfahren als Fluss-Diagramm,
- Fig. 3: ein Ausführungsbeispiel für das erfindungsgemäße Verfahren als Pseudo-Code,
- Fig. 4: ein Ausführungsbeispiel für ein Klienten-Server-System, auf welchem das erfindungsgemäße Verfahren ausgeführt werden kann.

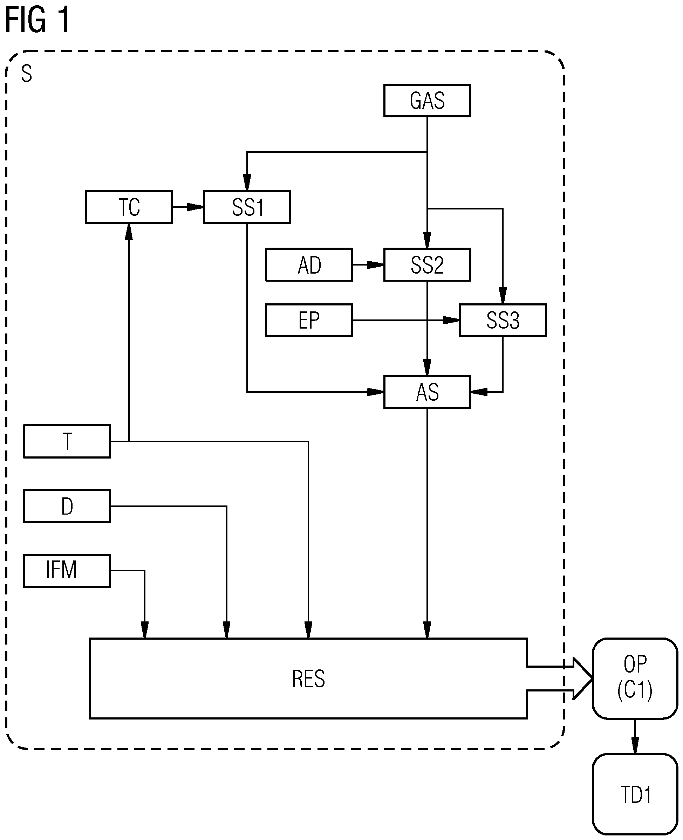

**Fig. 1** zeigt ein Ausführungsbeispiel der Erfindung für die zugrunde liegenden Daten, Modelle und deren Datenflüsse, die in der nachfolgenden Figur näher beschrieben sind.

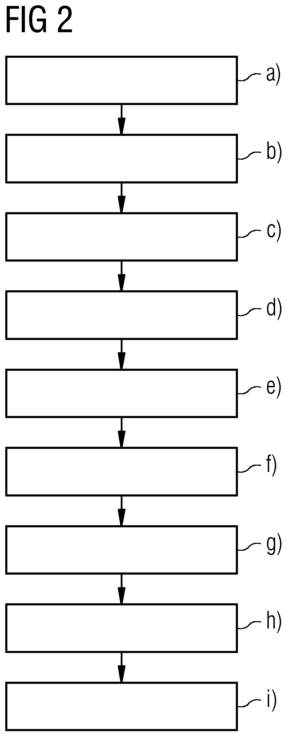

**Fig. 2** stellt ein Ausführungsbeispiel für das erfindungsgemäße Verfahren als Fluss-Diagramm dar.

Das Verfahren zum Betrieb eines technischen Geräts TD1 mit einer Steuervorrichtung C1 ist zumindest in Teilen computer-implementiert und umfasst folgende Schritte:
a) Bereitstellen von Daten und auszuführende Aufgaben für eine vorgegebene Anwendungs-Domäne AD,
b) Bereitstellen eines Grund-Modells IFM und einer Menge an vordefinierten Adaptern GAS in zumindest einem Speicher,
c) Klassifizieren der Aufgaben als Aufgaben-Klassifizierung TC,
d) Erstes Auswählen einer ersten Adapter-Teilmenge SS1 aus der Menge an Adaptern im Speicher bei Übereinstimmung mit der Aufgaben-Klassifizierung TC,
e) Zweites Auswählen einer zweiten Adapter-Teilmenge SS2 aus der Menge an Adaptern im Speicher anhand von vordefinierten Kriterien für die Anwendungs-Domäne AD,
f) Drittes Auswählen einer dritten Adapter-Teilmenge SS3 aus der Menge an Adaptern im Speicher anhand eines vorgegebenen Schwellwerts für vordefinierte Kriterien für die Ausführung EP des Modells und der Adapter auf einer Rechenvorrichtung,
g) Bestimmen einer Anwendungs-Menge AS von Adaptern, welche in der ersten, der zweiten und der dritten Teilmenge enthalten SS1-SS3 sind,
h) Erzeugen von Ergebnissen RES mit den Aufgaben T und den Daten D mithilfe eines Anwendungs-Modells AM, welches durch Anwendung der Anwendungs-Menge AS auf das Grund-Modell IFM abgeleitet wird,
i) Erzeugen von Steuersignalen CSIG für die Steuervorrichtung C1 zum Betrieb des technischen Geräts TD1 auf Basis der erzeugten Ergebnisse RES, und Betreiben OP des technischen Geräts TD1 mit den Steuersignalen CSIG durch die Steuervorrichtung C1.

Die Daten D können beispielsweise Bilddaten sein, und die auszuführenden Aufgaben T dazugehörige Bildanalyse-Aufgaben, beispielsweise für eine visuelle Qualitäts-Kontrolle von erzeugten Produkten, welche durch eine Produktionsmaschine hergestellt wurden.

Die Daten D können aber auch Betriebsdaten vom Betrieb des technischen Geräts TD1 sein, und die auszuführenden Aufgaben T dazugehörige Betriebsanalyse-Aufgaben, beispielsweise Sensor-Daten eines Vibrations-Sensors, welcher den Betrieb eines Motors überwacht, und die Betriebsanalyse-Aufgaben können beispielsweise Wartungs-Aufgaben für einen vorrausschauenden Betrieb mithilfe eines Modells auf Basis künstlicher Intelligenz sein.

Die Kriterien für die Ausführung des Anwendungs-Modells AM und der Adapter können beispielsweise Leistungs-Kriterien einer Rechenvorrichtung sein, welche Recheneigenschaften und/oder Speichereigenschaften und/oder Kommunikationseigenschaften der Rechenvorrichtung beschreiben.

Alternativ oder zusätzlich können die Kriterien für die Ausführung des Modells Leistungs-Kriterien bei der Erzeugung und Ausführung von Steuersignalen zum Betrieb des technischen Geräts durch die Steuervorrichtung beschreiben, um die verfügbaren Ressourcen der verbundenen Steuervorrichtung bei der Modell-Reduktion entsprechend zu berücksichtigen.

Die Steuersignale können Steuerinstruktionen CSIG zur Ausführung durch einen Prozessor sein.

Die Steuervorrichtung kann beispielsweise von einem Klienten C1 eines Klienten-Server-Systems umfasst sein, welche vorzugsweise eine Edge-Vorrichtung mit eingeschränkter Leistungsfähigkeit, wie ein ASIC oder FGPA anstelle eines leistungsfähigen Mikroprozessors ist.

Die Schritte a) bis h) des Verfahrens können dabei bevorzugt durch den Server S des Klienten-Server-Systems ausgeführt werden.

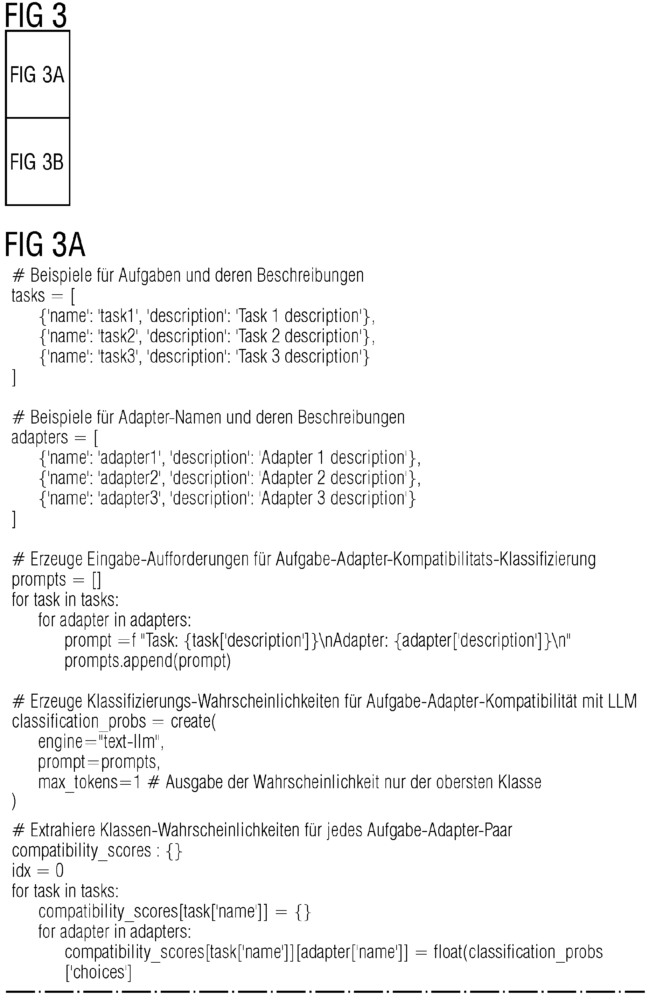

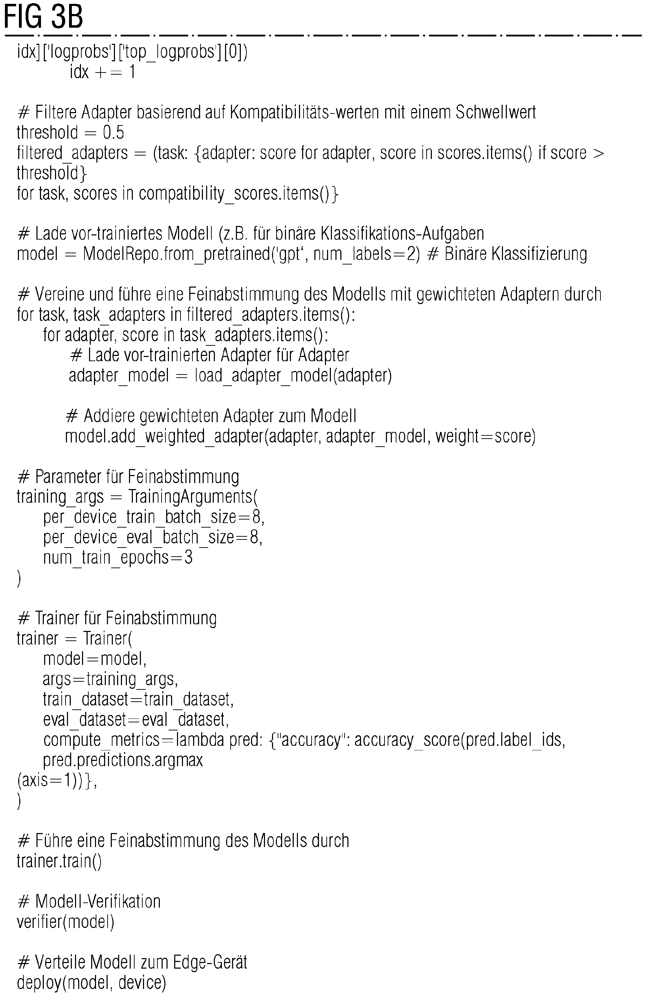

**Fig. 3** zeigt ein Ausführungsbeispiel für das erfindungsgemäße Verfahren als Pseudo-Code.

In diesem Beispiel ist gezeigt, wie Eingabe-Aufforderungen für eine Aufgabe-Adapter-Kompatibilitäts-Klassifizierung erzeugt werden.

Durch die Verwendung eines spezifischen Adapters für eine Anwendungsspezifische Aufgabe kann die Erzeugung eines kompakten und dennoch genauen Modells erreicht werden.

Es ist auch dargestellt, wie Klassifizierungs-Wahrscheinlichkeiten für Aufgabe-Adapter-Kompatibilität mit einem großen Sprachmodell LLM erzeugt werden können.

Ferner ist gezeigt, wie Klassen-Wahrscheinlichkeiten für jedes Aufgabe-Adapter-Paar extrahiert werden.

Außerdem ist ein Beispiel angegeben, wie Adapter basierend auf Kompatibilitäts-Werten mit einem Schwellwert gefiltert werden können.

Es wird ein vor-trainiertes Modell IFM (z.B. für binäre Klassifikations-Aufgaben) geladen, aus diesem durch Vereinigung von Teilmengen eine Anwendungs-Menge AS erzeugt und dadurch eine Feinabstimmung des Modells mit gewichteten Adaptern durchgeführt.

Parameter und Trainer für eine Feinabstimmung werden bereitgestellt und eine dementsprechende Feinabstimmung des Modells durchgeführt.

Anschließend erfolgten eine Modell-Verifikation und eine Modell-Verteilung zum Edge-Gerät.

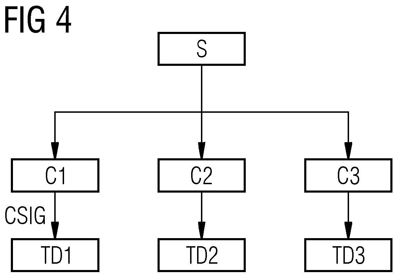

**Fig. 4** zeigt ein Ausführungsbeispiel für ein Klienten-Server-System, auf welchem das erfindungsgemäße Verfahren ausgeführt werden kann.

Das Klienten-Server-System weist einen Server S und Klienten C1-C3 auf, welche mit jeweiligen technischen Geräten TD1-TD3 verbunden sind, und über entsprechende Steuerinstruktionen CSIG angesteuert werden.

Dementsprechend umfasst das Klienten-Server-System einen Prozessor und einen Speicher, um des erfindungsgemäßen Verfahrens auszuführen, wobei Teile des Verfahrens vorzugsweise auf dem leistungsfähigen Server S ausgeführt werden.

Die Steuervorrichtung kann dabei von einem jeweiligen Klienten C1-C3 des Klienten-Server-Systems umfasst sein, und ist vorzugsweise eine Edge-Vorrichtung, besonders bevorzugt eine Edge-Vorrichtung mit einer Rechenvorrichtung in Form eines ASIC- oder FPGA-Halbleiter-Bauteils.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- AD: Anwendungs-Domäne
- AM: Anwendungs-Modell
- AS: Anwendungs-Menge
- C1-C3: Klient
- CSIG: Steuersignal, Steuerinstruktionen
- D: Daten
- GAS: allgemeine, generische Menge an Adaptern
- EP: Kriterien für die Ausführung, Ausführungs-Parameter
- IFM: industrielles Grund-Modell
- OP: Betrieb des technischen Geräts mit Steuersignalen
- RES: Ergebnis der gelösten Aufgabe
- S: Server
- SS1-SS3: Adapter-Teilmenge
- T: Aufgaben
- TC: Aufgaben-Klassifizierung
- TD1-TD3: technisches Gerät

## Patentansprüche

1. Computer-implementiertes Verfahren zum Betrieb eines technischen Geräts (TD1-TD3) mit einer Steuervorrichtung (C1-C3), umfassend folgende Schritte:
a) Bereitstellen von Daten und auszuführende Aufgaben für eine vorgegebene Anwendungs-Domäne (AD),
b) Bereitstellen eines Grund-Modells (IFM) und einer Menge an vordefinierten Adaptern (GAS) in zumindest einem Speicher,
c) Klassifizieren der Aufgaben als Aufgaben-Klassifizierung (TC),
d) Erstes Auswählen einer ersten Adapter-Teilmenge (SS1) aus der Menge an Adaptern im Speicher bei Übereinstimmung mit der Aufgaben-Klassifizierung (TC),
e) Zweites Auswählen einer zweiten Adapter-Teilmenge (SS2) aus der Menge an Adaptern im Speicher anhand von vordefinierten Kriterien für die Anwendungs-Domäne (AD),
f) Drittes Auswählen einer dritten Adapter-Teilmenge (SS3) aus der Menge an Adaptern im Speicher anhand eines vorgegebenen Schwellwerts für vordefinierte Kriterien für die Ausführung (EP) des Modells und der Adapter auf einer Rechenvorrichtung,
g) Bestimmen einer Anwendungs-Menge (AS) von Adaptern, welche in der ersten, der zweiten und der dritten Teilmenge enthalten (SS1-SS3) sind,
h) Erzeugen von Ergebnissen (RES) mit den Aufgaben (T) und den Daten (D) mithilfe eines Anwendungs-Modells (AM), welches durch Anwendung der Anwendungs-Menge (AS) auf das Grund-Modell (IFM) abgeleitet wird,
i) Erzeugen von Steuersignalen (CSIG) für die Steuervorrichtung (C1) zum Betrieb des technischen Geräts (TD1-TD3) auf Basis der erzeugten Ergebnisse (RES), und Betreiben (OP) des technischen Geräts (TD1-TD3) mit den Steuersignalen (CSIG) durch die Steuervorrichtung (C1-C3).

2. Verfahren nach dem vorhergehenden Anspruch, wobei die Daten (D) Bilddaten sind, und die auszuführenden Aufgaben (T) Bildanalyse-Aufgaben sind, insbesondere für eine visuelle Qualitäts-Inspektion zur Anwendung bei einem hergestellten Produkt.

3. Verfahren nach Anspruch 1, wobei die Daten (D) Betriebsdaten vom Betrieb des technischen Geräts (TD1-TD3) sind, und die auszuführenden Aufgaben (T) Betriebsanalyse-Aufgaben sind.

4. Verfahren nach einem der vorhergehenden Ansprüche, wobei die Kriterien für die Ausführung des Modells und der Adapter auf einer Rechenvorrichtung Leistungs-Kriterien sind, welche Recheneigenschaften und/oder Speichereigenschaften und/oder Kommunikationseigenschaften der Rechenvorrichtung beschreiben.

5. Verfahren nach einem der vorhergehenden Ansprüche, wobei die Kriterien für die Ausführung des Modells Leistungs-Kriterien bei der Erzeugung und Ausführung von Steuersignalen zum Betrieb des technischen Geräts durch die Steuervorrichtung beschreiben.

6. Verfahren nach einem der vorhergehenden Ansprüche, wobei die Steuersignale Steuerinstruktionen zur Ausführung durch einen Prozessor sind.

7. Verfahren nach einem der vorhergehenden Ansprüche, wobei die Steuervorrichtung von einem Klienten eines Klienten-Server-Systems umfasst ist, und vorzugsweise eine Edge-Vorrichtung ist.

8. Verfahren nach dem vorhergehenden Anspruch, wobei die Schritte a) bis h) des Verfahrens durch den Server des Klienten-Server-Systems ausgeführt werden.

9. System zum Betrieb eines technischen Geräts mit einem verbundenen Steuergerät, ferner umfassend einen Prozessor und einen Speicher, wobei das System dazu eingerichtet ist, das Verfahren nach einem der vorhergehenden Ansprüche auszuführen.

10. System nach dem vorhergehenden Anspruch, wobei das System ein Klienten-Server-Systems ist, und die Steuervorrichtung von einem Klienten des Klienten-Server-Systems umfasst ist, und vorzugsweise eine Edge-Vorrichtung ist.

11. Computer-Programm-Produkt, umfassend Befehle, die bei der Ausführung des Programms durch einen Computer diesen veranlassen, das Verfahren/die Schritte des Verfahrens nach einem der vorhergehenden Verfahrens-Ansprüche auszuführen.
